# EUROPEAN PATENT SPECIFICATION

(11) **EP 1 653 663 B1**
(45) Date of publication and mention of the grant of the patent: **29.04.2009**
(21) Application number: 04025957.4
(22) Date of filing: 02.11.2004
(51) Int. Cl.: H04L 12/28

(54) **Providing audio data stored in a mobile audio device to a vehicle audio system**
Versorgung eines Fahrzeugaudiosystems mit in einem mobilen Audiogerät gespeicherten Audiodaten
Fournissage des données audio stockées dans un dispositif audio mobile à un système audio de véhicule

(43) Date of publication of application: 03.05.2006
(73) Proprietor: Harman Becker Automotive Systems GmbH, 76307 Karlsbad (DE)
(72) Inventor: Krippgans, Thomas, 89077 Ulm (DE)
(74) Representative: Grünecker, Kinkeldey, Stockmair & Schwanhäusser Anwaltssozietät

(56) References cited:
- WO-A-03/000522
- DE-A1- 10 339 181
- DE-U1- 20 317 855
- US-A1- 2003 228 879
- US-A1- 2004 034 455
- "Hands-Free Profile, Adopted Version 1.0" BLUETOOTH SIG, [Online] 29 April 2003 (2003-04-29), pages 1-73, XP002330455 Retrieved from the Internet: URL:www.bluetooth.org> [retrieved on 2005-06-03]
- "Specification of the Bluetooth System, Profiles, Version 1.1, Part K:6, Headset Profile, Adopted Version" BLUETOOTH SPECIFICATION VERSION 1.1, [Online] 2 July 2003 (2003-07-02), pages 197-226, XP002330456 Retrieved from the Internet: URL:www.bluetooth.org> [retrieved on 2005-06-03]

## Description

### Field of Invention

The present invention relates to wireless communication in vehicles, in particular, to wirelessly providing audio data to a vehicle audio system and further to receiving audio data from a mobile audio device utilizing hands-free sets in vehicles.

### Prior Art

Hands-free telephones provide comfortable and safe communication systems of particular use in motor vehicles. If provided for vehicle, a remote headset can be connected to the mobile phone via a short-range radio link through transceivers. The short-range transceivers may be of a Time Division Multiple Access (TDMA) type, which means that for receiving and transmitting different frequencies and time slots, i.e. individual traffic channels, are used. If the transmission band is divided into a plurality of channels, data and voice, e.g., can be carried simultaneously.

On the other hand, consumer electronic hardware has become smaller and more efficient in recent years. In particular, great advances with respect to memory chips and miniaturization techniques allow for packaging of electronic devices in smaller and smaller spatial dimensions. Thus, portable or mobile cassette recorders, CD players, DVD players, MP3 player etc. are commonly available nowadays. In addition, more elaborated ones of such audio devices are equipped with some short-range radio communication facility.

Whereas usage of mobile audio devices of the kind mentioned above in vehicles utilizing the vehicle audio system represents an obvious consumers' request, no standard and, in particular, simple and low-cost realization is presently available. Rather, the availability of playing-back audio data stored in a mobile audio device via the vehicle audio system in a wireless way is largely restricted to integrated high-end audio systems for upper class vehicles as, e.g., integrated head units.

WO 031000522 A discloses a vehicle audio system that allows for selective output of audio data transmitted by different portable audio devices. Moreover, some priority classification is foreseen according to which some audio sources are allowed to be circumvented by other audio sources.

Alternative solutions provide hardware adapters to plug in the respective mobile audio device, e.g., into the radio unit. Such hardware solutions are not very convenient due to the demand for constructional modifications and, also, are not based on any standards.

It is therefore the objection of the present invention to provide a low-cost method and system for providing audio data stored in mobile devices to vehicle audio systems.

### Description of the Invention

The problem is solved by the method according to claim 1 and the system according to claim 7. According to claim 1, it is provided a method for providing audio data to a vehicle audio system, comprising the steps of
a) receiving by a transceiving means (12; 32) wirelessly transmitted audio data in an audio format from a mobile audio device (16; 26; 46; 46'); and
b) automatically routing the received audio data to the vehicle audio system (14; 24; 34; 44; 44') by the transceiving means (12; 32);
and either c) storing the routed audio data by the vehicle audio system (14; 24; 34; 44; 44'), if the storing step is initiated by a user, and/or
   data in a further format different from the audio format is received by the transceiving means (12; 32), in particular, received front a mobile phone (20; 48), or transmitted by the transceiving means (12; 32), in particular, transmitted to a mobile phone (20; 48), and/or data different from the audio data received from the mobile audio device (16; 26; 46; 46') is output by the vehicle audio system (14; 24; 34; 44; 44');
or d) outputting the routed audio data by the vehicle audio system (14; 24; 34; 44; 44'), if the step of outputting the routed audio data is initiated by a user, and/or
no storing is initiated by the user, and/or
no data in a further format different from the audio format is received by the transceiving means (12; 32), in particular, received from a mobile phone (20; 48), or transmitted by the transceiving means (12; 32), in particular, transmitted to a mobile phone (20; 48), and/or
no data different from the audio data received from the mobile audio device (16; 26; 46; 46') is output by the vehicle audio system (14; 24; 34; 44; 44').

The audio data that is wirelessly transmitted may represent data stored in the mobile audio device. The data is transmitted and received in a particular audio format or profile that is, in particular, different from common speech communication profiles as used, e.g., in hands-free telephony.

In particular, the transceiving means can be part of a hands-free system installed in the vehicle and can be configured to also receive audio data in a further format different from the audio format.

The method of claim 1 represents a convenient way for providing audio data stored in a mobile audio device to a vehicle audio system without the need of any hardware adapters. Thus, a user can, e.g., comfortably and readily play-back music stored in a mobile audio device via the vehicle audio system and listen to the music output by the car loudspeakers.

Advantageously, the receiving step of the provided method may be performed using the Bluetooth technology, in particular, wherein the audio format is chosen to be the Bluetooth audio profile, or the Wireless Local Area Network (WLAN) technology or infrared technology, in particular, the standard format of the Infrared Data Association (IrDa).

Bluetooth represents a short-distance (≤10 m) wireless communication technique that becomes increasingly prevalent. Bluetooth is relatively low in both cost and power consumption, which make it very suitable for mobile devices. When different communicatory apparatus operate in conformity with the Bluetooth standard, they may be operationally connected with each other, even if they are produced by different manufacturers.

To be more specific, the Bluetooth technology makes use of the ISM band (2,402 - 2,480 GHz) that is globally available and license-free. The employed fast frequency hoping method with 1600 frequency changes per second guarantees a relatively high interference resistance.

Besides radio technology infrared data transmission can be used according to an embodiment of the present invention. In this case the standards of the Infrared Data Association IrDa 1.0, providing a transfer rate up to 115 kbit/s, or the IrDa 1.1, providing a transfer rate up to 4 Mbit/s, may preferably used.

Whereas, in principle, the audio data may be received and routed whenever they are transmitted, it may be desirable to perform the receiving and/or the routing step under specified conditions.

Thus, it is provided a method for providing audio data to a vehicle audio system by a transceiving means comprising receiving wirelessly transmitted audio data in an audio format from a mobile audio device and automatically routing the received audio data to the vehicle audio system, if the receiving and/or the routing step are initiated by a user, and/or no data in a further format different from the audio format is received by the transceiving means, in particular, received from a mobile phone, or transmitted by the transceiving means, in particular, transmitted to a mobile phone, and/or no data different from the audio data received from the mobile audio device is output by the vehicle audio system.

If, e.g., a driver chooses to listen to a CD played-back by a CD player being part of the vehicle audio system, or if he listens to the broadcasting program of a radio station, he might want to exclude any possibility of receiving/routing audio data from a mobile audio device.

Also, in the case that communication via a mobile phone is performed, which includes receiving data in a format different from the audio format, it might be desirable to not enable receiving and/or routing the audio data in order not to disturb the telephone conversation. The further format different from the audio format may be the Bluetooth hands-free profile or the Bluetooth headset profile. These profiles are commonly available and well approved in practical applications.

The provided method comprises the steps of automatically storing or automatically outputting the routed audio data by the vehicle audio system. Thus, playing-back audio data, as music, stored in a mobile audio device can be performed very conveniently. Moreover, the audio data may advantageously be recorded by some storing means, e.g., if no immediate play-back of this data is wanted by the user.

If, for example, the audio data is received and routed to the vehicle audio system during a telephone call, it may be desirable to store the audio data for allowing to play-back this data after the call has been terminated.

By the herein provided method the chance of conflicting instructions for outputting different classes of data, for example, is reduced or eliminated.

The output volume of the output audio data may advantageously be automatically changed, if a predetermined condition is fulfilled, in particular, wherein the output volume is reduced, if data is received by the transceiving means from a mobile phone that is connected to the audio system, and/or if a predetermined class of broadcast data is output by the vehicle audio system.

Classes of broadcast data received by a car radio may comprise information on traffic conditions and news programs. Desirably, reducing or muting the output volume of the output audio data starts before, say, the news report becomes audible. After termination of the broadcast of the predetermined class of broadcast data, desirably, the volume of the output audio data may automatically be increased again to the previous level.

The receiving step can be performed by a hands-free set. Since hands-free set are very common in nowadays vehicles, utilizing these hands-free systems is a very convenient and low-cost way for providing audio data from a mobile audio device to a vehicle audio system.

It is also provided a system for providing audio data to a vehicle audio system according to claim 7.

The vehicle audio system may comprise a radio, a CD player, a DVD player, the voice output of a navigation system, an amplifier and loudspeakers It is configured to output the received and routed audio data.

According to one embodiment, the transceiving means can be configured to receive audio data using the Bluetooth technology, in particular, wherein the audio format is chosen to be the Bluetooth audio profile, or the Wireless Local Area Network (WLAN) technology or infrared technology, in particular, the standard format of the Infrared Data Association (IrDa).

The provided system may further comprise a mobile audio device comprising a transmitting means configured to transmit audio data in the audio format, the audio data being stored in the mobile audio device.

The transmitting means can be configured to transmit the audio data via the Bluetooth technology, in particular, wherein the audio format is chosen to be the Bluetooth audio profile, or via the Wireless Local Area Network (WLAN) technology or via infrared technology, in particular, the standard format of the Infrared Data Association (IrDa).

The transceiving means may be part of a vehicle hands-free set. It can be configured to receive audio data in a further format different from the audio format.

Further the system may comprise a mobile phone configured to transmit data in a further format different from the audio format to the transceiving means and to receive data in the further format from the transceiving means.

The further format may advantageously comprise the Bluetooth hands-free profile or the Bluetooth headset profile.

According to one embodiment the transceiving means can be configured to receive and/or automatically route the audio data, if receiving and/or routing are initiated by a user, and/or no data in a further format different from the audio format is received by the transceiving means, in particular, received from a mobile phone, or transmitted by the transceiving means, in particular, transmitted to a mobile phone, and/or no data different from the audio data received from the mobile audio device is output by the vehicle audio system.

According to another embodiment, the above described systems may be configured to change the output volume of the audio data output by the vehicle audio system, if a predetermined condition is fulfilled, in particular, wherein the output volume is reduced, if data is received by the transceiving means from a mobile phone that is connected to the audio system and/or a predetermined class of broadcast data is output by the vehicle audio system.

The mobile audio device may comprise a cassette player, a CD player, a DVD player or an MP3 player. In particular, the mobile audio device may comprise an MP3 player incorporated in a mobile phone.

The present invention also comprehends a vehicle comprising one of the systems described above.

Further, it is provided by the present invention use of a system according to the embodiments described above in a vehicular cabin.

Furthermore, it is provided a computer program product, comprising one or more computer readable media having computer-executable instructions for performing the steps of the methods described above.

Additional features and advantages of the present invention will be described with reference to the drawings. In the description, reference is made to the accompanying figures that are meant to illustrate preferred embodiments of the invention. It is understood that such embodiments do not represent the full scope of the invention that is defined by the claims given below.

Figure 1 shows components of an example of the herein provided system comprising a vehicle audio system, a transceiving means, a transmitting device and a mobile audio device.

Figure 2 shows components of an embodiment comprising a car radio, a car bus, a hands-free set, a mobile phone and an MP3 player.

Figure 3 illustrates the provided method of playing-back audio data stored in a mobile audio device by a vehicle audio system.

Figures 4a and 4b illustrate the operation of an embodiment of the provided system comprising a mobile phone, a mobile audio device, a hands-free set and a vehicle audio system.

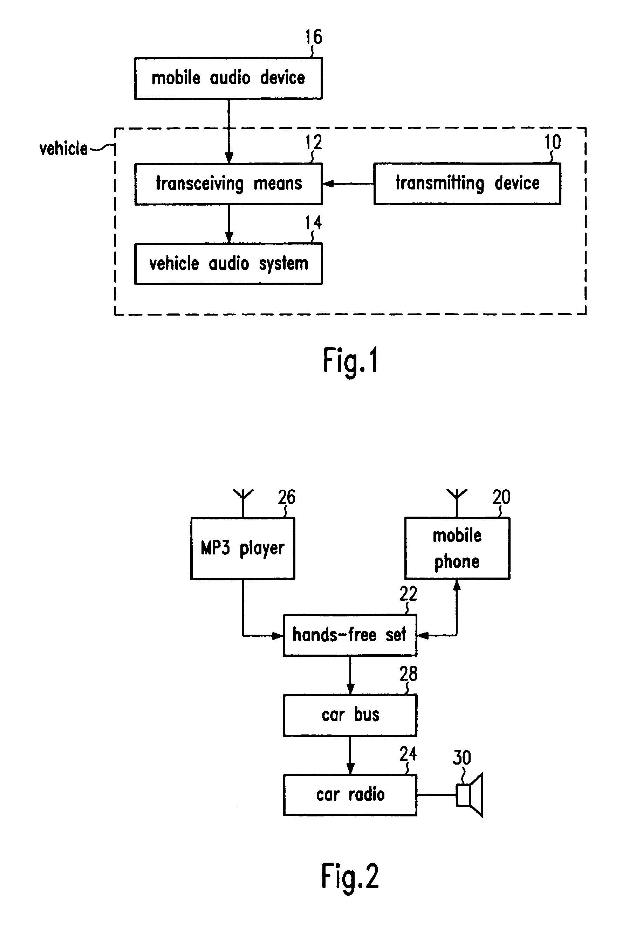

Figure 1 shows a transmitting device 10 configured to transmit data in a format different from an audio format used by a mobile audio device 16, a transceiving means 12 and a vehicle audio system 14 installed in a vehicle as indicated by the dashed box. The transmitting device transmits radio signals to the transceiving means 12 that in course routes the received radio signals to the vehicle audio system 14. The transmission is performed using a Bluetooth transmitter of the transmitting device. The data is formatted according to the Bluetooth hands-free profile. The transceiving means is accordingly configured to receive data formatted according to the Bluetooth hands-free profile.

Alternatively, instead of the Bluetooth technology, infrared technology may be used, if the mobile audio device is provided with an infrared transmitter and the transceiving means is enabled to receive infrared signals. In the case of communication via infrared signals, the IrDA standard may be used.

The vehicle audio system 14 may comprise a radio, a CD player, a DVD player, the voice output of a navigation system, an amplifier and loudspeakers. The radio signals can, in principle, be output by the loudspeakers of the vehicle audio system 14 after being received and routed by the transceiving means.

According to the present invention, a mobile audio device 16 may also be used inside the vehicle employing the vehicle audio system 14. For example, the mobile audio device 16 is equipped with a Bluetooth radio technology. Through this wireless technology the mobile audio device 16 can be connected to the Bluetooth enabled transceiving means 12 that receives the radio signals transmitted by the mobile audio device 16 and routes them to the vehicle audio system 14. The radio signals transmitted by the mobile audio device represent the audio data stored in the mobile audio device and the Bluetooth audio profile is advantageously employed for transmission.

The transceiving means, thus, is at least capable of receiving and routing data formatted according to the Bluetooth audio profile and the Bluetooth hands-free profile. Additionally, it may be able to handle data formatted according to the Bluetooth headset profile or to the Advanced Audio Distribution Profile.

The components displayed in Figure 1 allow for playing-back data stored in the mobile audio device by the vehicle audio system. For example, a driver of the vehicle can listen to music that is stored in the mobile audio device, transmitted to the vehicle audio system and output by the car loudspeakers.

Figure 2 illustrates the functionality of one embodiment of the present invention. A vehicle is equipped with a car radio 24 and loudspeakers 30 as well as with a hands-free set 22. The hands-free set is connected via Bluetooth with a mobile phone 20 and, via a car bus 28, also with the car radio 24. The communication between the mobile phone 20 and the hands-free set 22 is established by means of the Bluetooth hands-free profile.

According to the present embodiment the hands-free set 22 can be used to receive audio data transmitted from a mobile MP3 player 26 utilizing the Bluetooth audio profile. The audio data received by the hands-free system can be routed to the car radio 24 and can be played-back via the loudspeakers 30 of the car radio. Thus, a user can listen, e.g., to music stored in an MP3 player 26 via the loudspeakers 30. Here, the car radio and the loudspeakers represent a rather basic embodiment of a vehicle audio system. In general, the vehicle audio system may comprise different additional Hifi components.

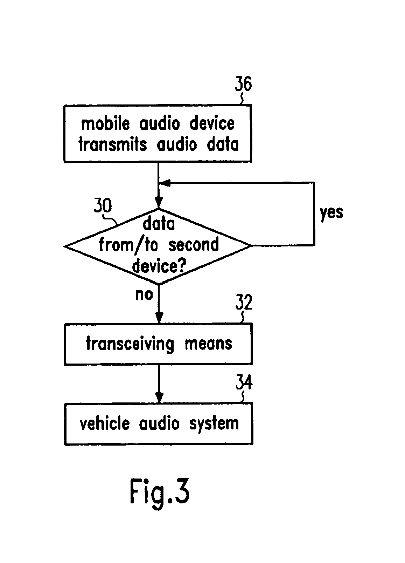

Figure 3 illustrates the functionality of an embodiment of the provided method for providing audio data to a vehicle audio system. Suppose that besides some mobile audio device a second device for transmitting radio signals to the transceiving means 32 is available in the vehicle. The second device can be a mobile phone connected with a vehicle hands-free system comprising the transceiving means 32.

The mobile audio device transmits audio data 36, such as music stored in the mobile audio device, in an audio format, such as the Bluetooth audio profile. In particular, in the case that the second device is a mobile phone, it is desirable that the transceiving means 32 receives and/or routes the audio data transmitted by the mobile audio device 36 only, if no communication between the second device and the transceiving means 32 is present.

Therefore, it is checked whether radio signals from/to the second device are present 30. If the second device and the transceiving means are communicating with each other, the audio data transmitted by the mobile audio device is not received by the transceiving means 32 and/or not routed to the audio vehicle system 34, i.e. in any case not output by the car loudspeakers.

If radio signals from/to the second device are present 30, it may be desirable to receive the data transmitted by the mobile audio device and to store this data in a storing device, being an optional component of the vehicle audio system (not shown). The stored data can then be played-back after the communication between the second device and the transceiving means has been terminated.

If, on the contrary, no radio signals are transmitted to or received from the second device by the transceiving means 32, the audio data transmitted by the mobile audio device 36 is routed to the vehicle audio system and can accordingly be played-back and output by the car loudspeakers.

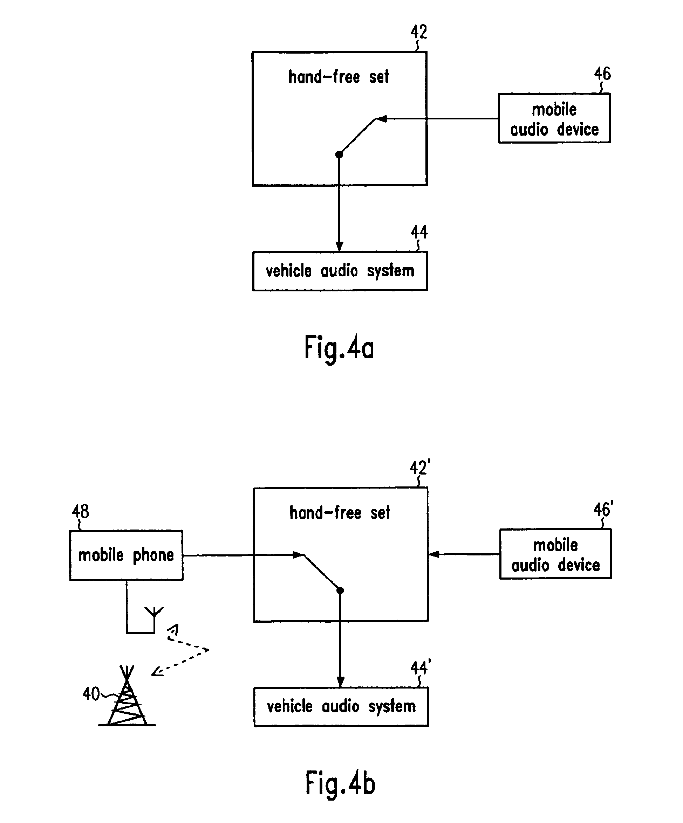

Figures 4a and 4b further illustrate the operation of an advantageous embodiment. As shown in Figure 4a, a mobile audio device 46 transmits audio data as radio signals formatted according to the Bluetooth profile to a hands-free set 42 installed in a vehicle. The hands-free set comprises a switch to route the audio data transmitted by the mobile audio device 46 to a vehicle audio system 44. For example, a driver can listen to music stored in a mobile MP3 player, since the audio data stored in the mobile MP3 player is transmitted to the hands-free set, routed to the vehicle audio system and played-back and output via car loudspeakers.

With reference to Figure 4b, at some time an external mobile phone radio transceiver 40 addresses a mobile phone 48 inside the vehicle that is connected via Bluetooth with the vehicle hands-free set 42'. In this case, the switch is turned-over from the input position for the radio signals transmitted by the mobile audio device 46' to a new receiving position to receive the signals transmitted by the mobile phone radio transceiver 40 in order to output the verbal utterances of a remote party by the vehicle audio system 44' comprising, in particular, car loudspeakers.

The same switch position may also enable the hands-free set to transmit radio signals representing verbal utterances of the driver to the mobile phone 48 utilizing the Bluetooth hands-free profile. These signals are further transmitted from the mobile phone to the external transceiver 40.

The mobile audio device 46' may or may not continue to transmit radio signals. These signals, however, are not routed to the vehicle audio system 44' any longer. Rather the hands-free set 42' can receive signals transmitted by the mobile phone 48.

Advantageously, the switch is automatically turned-over back to the position allowing for playing-back the audio data stored in the mobile audio device and transmitted to the hands-free set, after the communication between the mobile phone 48 and the external mobile phone transceiver 40 has been terminated.

The illustrated system may additionally comprise a headset (not shown) that is connected via Bluetooth with the mobile phone utilizing the Bluetooth hands-free or the Bluetooth headset profiles. In this case when communicating with a remote party the utterances of the user are detected by the microphones of the headset rather than by the microphones of the hands-free set. The radio signals transmitted by the external transmitter 40 and received by the mobile phone 48 can be both transmitted to the loudspeakers of the headset and the vehicle audio system.

## Claims

1. Method for providing audio data to a vehicle audio system (14; 24; 34; 44; 44'), comprising
a) receiving by a transceiving means (12; 32) wirelessly transmitted audio data in an audio format from a mobile audio device (16; 26; 46; 46'); and
b) automatically routing the received audio data to the vehicle audio system (14; 24; 34; 44; 44') by the transceiving means (12; 32);
and either c) storing the routed audio data by the vehicle audio system (14; 24; 34; 44; 44'), if
the storing step is initiated by a user, and/or
data in a further format different from the audio format is received by the transceiving means (12; 32), in particular, received from a mobile phone (20; 48), or transmitted by the transceiving means (12; 32), in particular, transmitted to a mobile phone (20; 48), and/or
data different from the audio data received from the mobile audio device (16; 26; 46; 46') is output by the vehicle audio system (14; 24; 34; 44; 44');
or d) outputting the routed audio data by the vehicle audio system (14; 24; 34; 44; 44'), if
the step of outputting the routed audio data is initiated by a user, and/or no storing is initiated by the user, and/or
no data in a further format different from the audio format is received by the transceiving means (12; 32), in particular, received from a mobile phone (20; 48), or transmitted by the transceiving means (12; 32), in particular, transmitted to a mobile phone (20; 48), and/or
no data different from the audio data received from the mobile audio device (16; 26; 46; 46') is output by the vehicle audio system (14; 24; 34; 44; 44').

2. Method according to claim 1, wherein the receiving step is performed using the Bluetooth technology, in particular, wherein the audio format is chosen to be the Bluetooth audio profile, or the Wireless Local Area Network (WLAN) technology or infrared technology, in particular, the standard format of the Infrared Data Association (IrDa).

3. Method according to claim 1 or 2, wherein the receiving and/or the routing step are performed, if the receiving and/or the routing step are initiated by a user.

4. Method according to claim 3, wherein the further format is chosen to be the Bluetooth hands-free profile or the Bluetooth headset profile.

5. Method according to one of the preceding claims, wherein the output volume of the output audio data is automatically changed, if a predetermined condition is fulfilled, in particular, wherein the output volume is reduced, if data is received by the transceiving means (12; 32) from a mobile phone (20; 48) that is connected to the audio system, and/or if a predetermined class of broadcast data is output by the vehicle audio system (14; 24; 34; 44; 44').

6. Method according to one of the preceding claims, wherein the receiving step is performed by a hands-free set (22; 42; 42').

7. System for providing audio data to a vehicle audio system (14; 24; 34; 44; 44'), comprising
a transceiving means (12; 32) configured to receive wirelessly transmitted audio data in an audio format from a mobile audio device (16; 26; 46; 46') and to automatically route the received audio data, in particular, via a car bus system (28), to the vehicle audio system (14; 24; 34; 44; 44'); and
a storing means configured to store the audio data received by the transceiving means (12; 32);
wherein the system is configured to
automatically store audio data by the storing means, if
storing is initiated by a user; and/or
data in the further format different from the audio format is received by the transceiving means (12; 32), in particular, received from a mobile phone (20; 48), or transmitted by the transceiving means (12; 32), in particular, transmitted to a mobile phone (20; 48), and/or
data different from the audio data received from the mobile audio device (16; 26; 46; 46') is output by the vehicle audio system (14; 24; 34; 44; 44'); and
output the audio data received from the mobile audio device (16; 26; 46; 46') by the vehicle audio system (14; 24; 34; 44; 44'), if
outputting of the routed audio data is initiated by a user; and/or
no storing of the received audio data is initiated by the user; and/or
no data in a further format different from the audio format is received by the transceiving means (12; 32), in particular, received from a mobile phone (20; 48), or transmitted by the transceiving means (12; 32), in particular, transmitted to a mobile phone (20; 48), and/or
no data different from the audio data received from the mobile audio device (16; 26; 46; 46') is output by the vehicle audio system (14; 24; 34; 44; 44').

8. System according to claim 7, wherein the transceiving means (12; 32) is configured to receive audio data using the Bluetooth technology, in particular, wherein the audio format is chosen to be the Bluetooth audio profile, or the Wireless Local Area Network (WLAN) technology or infrared technology, in particular, the standard format of the Infrared Data Association (IrDa).

9. System according to claim 7 or 8, further comprising a mobile audio device (16; 26; 46; 46') comprising a transmitting means configured to transmit audio data in the audio format, the audio data being stored in the mobile audio device (16; 26; 46; 46').

10. System according to claim 9, wherein the transmitting means is configured to transmit the audio data via the Bluetooth technology, in particular, wherein the audio format is chosen to be the Bluetooth audio profile, or via the Wireless Local Area Network (WLAN) technology or via infrared technology, in particular, the standard format of the Infrared Data Association (IrDa).

11. System according to one of the claims 7 - 10, wherein the transceiving means (12; 32) is part of a vehicle hands-free set (22; 42; 42') and is configured to also receive audio data in a further format different from the audio format.

12. System according to one of the claims 10 - 11, further comprising a mobile phone (20; 48) configured to transmit data in a further format different from the audio format to the transceiving means (12; 32) and to receive data in the further format from the transceiving means (12; 32).

13. System according to claim 11 or 12, wherein the further format comprises the Bluetooth hands-free profile or the Bluetooth headset profile.

14. System according to one of the claims 7 - 13, wherein the transceiving means (12; 32) is configured to receive and/or automatically route the audio data, if receiving and/or routing are initiated by a user.

15. System according to one of the claims 7 - 14 and configured to change the output volume of the audio data output by the vehicle audio system (14; 24; 34; 44; 44'), if a predetermined condition is fulfilled, in particular, wherein the output volume is reduced, if data is received by the transceiving means (12; 32) from a mobile phone (20; 48) that is connected to the audio system and/or a predetermined class of broadcast data is output by the vehicle audio system (14; 24; 34; 44; 44').

16. System according to one of the claims 7 - 15, wherein the mobile audio device (16; 26; 46; 46') comprises a cassette player, a CD player, a DVD player or an MP3 player.

17. Computer program product, comprising one or more computer readable media having computer-executable instructions for performing the steps of the method according to one of the claims 1 - 6.

## Patentansprüche

1. Verfahren zum Bereitstellen von Audiodaten für ein Fahrzeug-Audiosystem (14; 24; 34; 44; 44'), das umfasst:
a) Empfangen drahtlos übermittelter Audiodaten in einem Audioformat von einer mobilen Audiovorrichtung (16; 26; 46; 46') durch eine Sende/Empfangseinrichtung (12; 32) und
b) automatisches Weiterleiten der empfangenen Audiodaten zu dem Fahrzeug-Audiosystem (14; 24; 34; 44; 44') durch die Sende/Empfangseinrichtung (12; 32);
und entweder c) Speichern der weitergeleiteten Audiodaten durch das Fahrzeug-Audiosystem (14; 24; 34; 44; 44'), wenn
der Speicherschritt durch einen Benutzer eingeleitet wird, und/oder
Daten in einem weiteren Format, das sich von dem Audioformat unterscheidet, durch die Sende/Empfangseinrichtung (12; 32) empfangen werden, insbesondere von einem Mobiltelefon (20; 48) empfangen werden oder durch die Sende/Empfangseinrichtung (12; 32) gesendet werden, insbesondere zu dem Mobiltelefon (20; 48) gesendet werden und/oder
Daten, die sich von den von der mobilen Audiovorrichtung (16; 26; 46; 46') empfangenen Audiodaten unterscheiden, durch das Fahrzeug-Audiosystem (14; 24; 34; 44; 44') ausgegeben werden;
oder d) Ausgeben der weitergeleiteten Audiodaten durch das Fahrzeug-Audiosystem (14; 24; 34; 44; 44'), wenn
der Schritt des Ausgebens der weitergeleiteten Daten durch einen Benutzer eingeleitet wird, und/oder
kein Speichern durch den Benutzer eingeleitet wird, und/oder
keine Daten in einem weiteren Format, das sich von dem Audioformat unterscheidet, durch die Sende/Empfangseinrichtung (12; 32) empfangen werden, insbesondere von einem Mobiltelefon (20; 48) empfangen werden, oder durch die Sende/Empfangseinrichtung (12; 32) gesendet werden, insbesondere zu einem Mobiltelefon (20; 48) gesendet werden, und/oder
keine Daten, die sich von den von der mobilen Audiovorrichtung (16; 26; 46; 46') empfangenen Audiodaten unterscheiden, durch das Fahrzeug-Audiosystem (14; 24; 34; 44; 44') ausgegeben werden.

2. Verfahren nach Anspruch 1, wobei der Empfangsschritt unter Verwendung der Bluetooth-Technologie durchgeführt wird, und dabei insbesondere das Audioformat so ausgewählt wird, dass es das Bluetooth-Audioprofil ist, oder unter Verwendung der WLAN-Technologie (Wireless Local Area Network technology) oder der Infrarot-Technologie, insbesondere des Standardformats der Infrared Data Association (IrDa).

3. Verfahren nach Anspruch 1 oder 2, wobei der Empfangs- und/oder der Weiterleitschritt durchgeführt werden, wenn der Empfangs- und/oder der Weiterleitschritt durch einen Benutzer eingeleitet werden/wird.

4. Verfahren nach Anspruch 3, wobei das weitere Format so ausgewählt wird, dass es das Bluetooth-Freisprechprofil oder das Bluetooth-Headsetprofil ist.

5. Verfahren nach einem der vorangehenden Ansprüche, wobei die Ausgabelautstärke der Ausgabe-Audiodaten automatisch geändert wird, wenn eine vorgegebene Bedingung erfüllt ist, wobei insbesondere die Ausgabelautstärke reduziert wird, wenn Daten durch die Sende/Empfangseinrichtung (12; 32) von einem Mobiltelefon (20; 48) empfangen werden, das mit dem Audiosystem verbunden ist, und/oder, wenn eine vorgegebene Klasse von Rundfunkdaten durch das Fahrzeug-Audiosystem (14; 24; 34; 44; 44') ausgegeben wird.

6. Verfahren nach einem der vorangehenden Ansprüche, wobei der Empfangsschritt mittels einer Freisprechanlage (22; 42; 42') durchgeführt wird.

7. System zum Bereitstellen von Audiodaten für ein Fahrzeug-Audiosystem (14; 24; 34; 44; 44'), das umfasst:
eine Sende/Empfangseinrichtung (12; 32), die so konfiguriert ist, dass sie drahtlos übermittelte Audiodaten in einem Audioformat von einer mobilen Audiovorrichtung (16; 26; 46; 46') empfängt und die empfangenen Audiodaten automatisch, insbesondere über ein Fahrzeug-Bussystem (28), zu dem Fahrzeug-Audiosystem (14; 24; 34; 44; 44') weiterleitet; und
eine Speichereinrichtung, die so konfiguriert ist, dass sie die durch die Sende/Empfangseinrichtung (12; 32) empfangenen Audiodaten speichert;
wobei das System so konfiguriert ist, dass es:
automatisch Audiodaten mit der Speichereinrichtung speichert, wenn
das Speichern durch einen Benutzer eingeleitet wird; und/oder
Daten in dem weiteren Format, das sich von dem Audioformat unterscheidet, durch die Sende/Empfangseinrichtung (12; 32) empfangen werden, insbesondere von einem Mobiltelefon (20; 48) empfangen werden, oder durch die Sende/Empfangseinrichtung (12; 32) gesendet werden, insbesondere zu einem Mobiltelefon (20; 48) gesendet werden, und/oder
Daten, die sich von den von der mobilen Audiovorrichtung (16; 26; 46; 46') empfangenen Audiodaten unterscheiden, durch das Fahrzeug-Audiosystem (14; 24; 34; 44; 44') ausgegeben werden; und
die von der mobilen Audiovorrichtung (16; 26; 46; 46') empfangenen Audiodaten mittels des Fahrzeug-Audiosystems (14; 24; 34; 44; 44') ausgibt, wenn
Ausgeben der weitergeleiteten Audiodaten durch einen Benutzer eingeleitet wird; und/oder
kein Speichern der empfangenen Audiodaten durch den Benutzer eingeleitet wird; und/oder
keine Daten in einem weiteren Format, das sich von dem Audioformat unterscheidet, durch die Sende/Empfangseinrichtung (12; 32) empfangen werden, insbesondere von einem Mobiltelefon (20; 48) empfangen werden, oder durch die Sende/Empfangseinrichtung (12; 32) gesendet werden, insbesondere zu einem Mobiltelefon (20; 48) gesendet werden, und/oder
keine Daten, die sich von den von der mobilen Audiovorrichtung (16; 26; 46; 46') empfangenen Audiodaten unterscheiden, durch das Fahrzeug-Audiosystem (14; 24; 34; 44; 44') empfangen werden.

8. System nach Anspruch 7, wobei die Sende/Empfangseinrichtung (12; 32) so konfiguriert ist, dass sie Audiodaten unter Verwendung der Bluetooth-Technologie empfängt, wobei insbesondere das Audioformat so ausgewählt wird, dass es das Bluetooth-Audioprofil ist, oder unter Verwendung der WLAN-Technologie (Wireless Local Area Network technology) oder der Infrarot-Technologie, insbesondere des Standardformats der Infrared Data Association (IrDa).

9. System nach Anspruch 7 oder 8, das des Weiteren eine mobile Audiovorrichtung (16; 26; 46; 46') umfasst, die ein Sendeeinrichtung umfasst, die so konfiguriert ist, dass sie Audiodaten in dem Audioformat sendet, wobei die Audiodaten in der mobilen Audiovorrichtung (16; 26; 46; 46') gespeichert werden.

10. System nach Anspruch 9, wobei die Sendeeinrichtung so konfiguriert ist, dass sie die Audiodaten mittels der Bluetooth-Technologie sendet, wobei insbesondere das Audioformat so ausgewählt wird, dass es das Bluetooth-Audioprofil ist, oder mittels der WLAN-Technologie (Wireless Local Area Network technology) oder der Infrarot-Technologie, insbesondere des Standardformats der Infrared Data Association (IrDa).

11. System nach einem der Ansprüche 7 - 10, wobei die Sende/Empfangseinrichtung (12; 32) Teil einer Fahrzeug-Freisprechanlage (22; 42; 42') ist und so konfiguriert ist, dass sie auch Audiodaten in einem weiteren Format empfängt, das sich von dem Audioformat unterscheidet.

12. System nach einem der Ansprüche 10 - 11, das des Weiteren ein Mobiltelefon (20; 48) umfasst, das so konfiguriert ist, das es Daten in einem weiteren Format, das sich von dem Audioformat unterscheidet, zu der Sende/Empfangseinrichtung (12; 32) sendet und Daten in dem weiteren Format von der Sende/Empfangseinrichtung (12; 32) empfängt.

13. System nach Anspruch 11 oder 12, wobei das weitere Format das Bluetooth-Freisprechprofil oder das Bluetooth-Headsetprofil umfasst.

14. System nach einem der Ansprüche 7 - 13, wobei die Sende/Empfangseinrichtung (12; 32) so konfiguriert ist, dass sie die Audiodaten empfängt und/oder automatisch weiterleitet, wenn Empfangen und/oder Weiterleiten durch einen Benutzer eingeleitet werden/wird.

15. System nach einem der Ansprüche 7-14, das so konfiguriert ist, dass es die Ausgabelautstärke der durch das Fahrzeug-Audiosystem (14; 24; 34; 44; 44') ausgegebenen Audiodaten ändert, wenn eine vorgegebene Bedingung erfüllt ist, wobei insbesondere die Ausgabelautstärke reduziert wird, wenn Daten durch die Sende/Empfangseinrichtung (12; 32) von einem Mobiltelefon (20; 48) empfangen werden, das mit dem Audiosystem verbunden ist, und/oder eine vorgegebene Klasse von Rundfunkdaten durch das Fahrzeug-Audiosystem (14; 24; 34; 44; 44') ausgegeben wird.

16. System nach einem der Ansprüche 7 - 15, wobei die mobile Audiovorrichtung (16; 26; 46; 46') ein Kassettenabspielgerät, ein CD-Abspielgerät, ein DVD-Abspielgerät oder ein MP3-Abspielgerät umfasst.

17. Computerprogrammerzeugnis, das ein oder mehrere durch Computer lesbare Medien umfasst, das/die durch Computer ausführbare Befehle zum Durchführen der Schritte des Verfahrens nach einem der Ansprüche 1 - 6 aufweist/aufweisen.

## Revendications

1. Procédé pour fournir des données audio à un système audio de véhicule (14 ; 24 ; 34 ; 44 ; 44'), comprenant
a) la réception par un moyen de transmission-réception (12; 32) de données audio transmises de manière sans fil dans un format audio en provenance d'un dispositif audio mobile (16 ; 26 ; 46 ; 46') ; et
b) le routage automatique des données audio reçues vers le système audio de véhicule (14; 24; 34; 44; 44') par le moyen de transmission-réception (12 ; 32) ;
et soit c) le stockage des données audio routées par le système audio de véhicule (14 ; 24 ; 34 ; 44 ; 44'), si
l'étape de stockage est initiée par un utilisateur, et/ou
des données dans un autre format différent du format audio sont reçues par les moyens de transmission-réception (12 ; 32), en particulier, reçues en provenance d'un téléphone mobile (20 ; 48), ou transmises par les moyens de transmission-réception (12 ; 32), en particulier, transmises à un téléphone mobile (20 ; 48), et/ou
des données différentes des données audio reçues en provenance du dispositif audio mobile (16 ; 26 ; 46 ; 46') sont sorties par le système audio de véhicule (14 ; 24 ; 34 ; 44 ; 44')
soit d) la sortie des données audio routées par le système audio de véhicule (14 ; 24 ; 34 ; 44 ; 44'), si
l'étape de sortie des données audio routées est initiée par un utilisateur, et/ou
aucun stockage n'est initié par l'utilisateur, et/ou
aucune donnée dans un autre format différent du format audio n'est reçue par le moyen de transmission-réception (12 ; 32), en particulier, n'est reçue en provenance d'un téléphone mobile (20 ; 48), ni transmise par le moyen de transmission-réception (12 ; 32), en particulier, transmise à un téléphone mobile (20 ; 48), et/ou
aucune donnée différente des données audio reçues en provenance du dispositif audio mobile (16 ; 26 ; 46 ; 46') n'est sortie par le système audio de véhicule (14 ; 24 ; 34 ; 44 ; 44').

2. Procédé selon la revendication 1, dans lequel l'étape de réception est effectuée en utilisant la technologie Bluetooth, en particulier, dans lequel le format audio est choisi comme étant le profil audio Bluetooth, ou la technologie de réseau local sans fil (WLAN) ou la technologie infrarouge, en particulier, le format standard de l'association de données infrarouge (IrDA).

3. Procédé selon la revendication 1 ou 2, dans lequel l'étape de réception et/ou de routage est effectuée, si l'étape de réception et/ou de routage est initiée par un utilisateur.

4. Procédé selon la revendication 3, dans lequel l'autre format est choisi comme étant le profil mains libres Bluetooth ou le profil oreillette Bluetooth.

5. Procédé selon l'une des revendications précédentes, dans lequel le volume de sortie des données audio de sortie est changé automatiquement, si une condition prédéterminée est satisfaite, en particulier, dans lequel le volume de sortie est réduit, si des données sont reçues par le moyen de transmission-réception (12 ; 32) en provenance d'un téléphone mobile (20 ; 48) qui est connecté au système audio, et/ou si une classe prédéterminée de données de diffusion est sortie par le système audio de véhicule (14 ; 24 ; 34 ; 44 ; 44').

6. Procédé selon l'une des revendications précédentes, dans lequel l'étape de réception est effectuée par un ensemble mains libres (22 ; 42 ; 42').

7. Système pour fournir des données audio à un système audio de véhicule (14 ; 24 ; 34 ; 44 ; 44'), comprenant
un moyen de transmission-réception (12 ; 32) configuré pour recevoir des données audio transmises de manière sans fil dans un format audio en provenance d'un dispositif audio mobile (16 ; 26 ; 46 ; 46') et pour router automatiquement les données audio reçues, en particulier, via un système de bus de voiture (28), vers le système audio de véhicule (14 ; 24 ; 34 ; 44 ; 44') ; et
un moyen de stockage configuré pour stocker les données audio reçues par le moyen de transmission-réception (12 ; 32) ;
dans lequel le système est configuré pour
stocker automatiquement des données audio par le moyen de stockage, si
le stockage est initié par un utilisateur ; et/ou
des données dans l'autre format différent du format audio sont reçues par le moyen de transmission-réception (12 ; 32), en particulier, reçues en provenance d'un téléphone mobile (20 ; 48), ou transmises par le moyen de transmission-réception (12 ; 32), en particulier, transmises à un téléphone mobile (20 ; 48), et/ou
des données différentes des données audio reçues en provenance du dispositif audio mobile (16 ; 26 ; 46 ; 46') sont sorties par le système audio de véhicule (14 ; 24 ; 34 ; 44 ; 44') ; et
sortir les données audio reçues en provenance du dispositif audio mobile (16 ; 26 ; 46 ; 46') par le système audio de véhicule (14 ; 24 ; 34 ; 44 ; 44'), si
la sortie des données audio routées est initiée par un utilisateur ; et/ou
aucun stockage des données audio reçues n'est initié par l'utilisateur ; et/ou
aucune donnée dans un autre format différent du format audio n'est reçue par le moyen de transmission-réception (12 ; 32), en particulier, n'est reçue en provenance d'un téléphone mobile (20 ; 48), ni transmise par le moyen de transmission-réception (12 ; 32), en particulier, transmise à un téléphone mobile (20 ; 48) ; et/ou
aucune donnée différente des données audio reçues en provenance du dispositif audio mobile (16 ; 26 ; 46 ; 46') n'est sortie par le système audio de véhicule (14 ; 24 ; 34 ; 44 ; 44').

8. Système selon la revendication 7, dans lequel le moyen de transmission-réception (12 ; 32) est configuré pour recevoir des données audio en utilisant la technologie Bluetooth, en particulier, dans lequel le format audio est choisi comme étant le profil audio Bluetooth, ou la technologie de réseau local sans fil (WLAN) ou la technologie infrarouge, en particulier, le format standard de l'association de données infrarouge (IrDA).

9. Système selon la revendication 7 ou 8, comprenant en outre un dispositif audio mobile (16; 26; 46; 46') comprenant un moyen de transmission configuré pour transmettre des données audio dans le format audio, les données audio étant stockées dans le dispositif audio mobile (16 ; 26 ; 46 ; 46').

10. Système selon la revendication 9, dans lequel le moyen de transmission est configuré pour transmettre les données audio via la technologie Bluetooth, en particulier, dans lequel le format audio est choisi comme étant le profil audio Bluetooth, ou via la technologie de réseau local sans fil (WLAN) ou via la technologie infrarouge, en particulier, le format standard de l'association de données infrarouge (IrDA).

11. Système selon l'une des revendications 7 à 10, dans lequel le moyen de transmission-réception (12 ; 32) fait partie d'un ensemble mains libres de véhicule (22 ; 42 ; 42') et est configuré pour recevoir également des données audio dans un autre format différent du format audio.

12. Système selon l'une des revendications 10 et 11, comprenant en outre un téléphone mobile (20 ; 48) configuré pour transmettre des données dans un autre format différent du format audio au moyen de transmission-réception (12 ; 32) et pour recevoir des données dans l'autre format en provenance du moyen de transmission-réception (12 ; 32).

13. Système selon la revendication 11 ou 12, dans lequel l'autre format comprend le profil mains libres Bluetooth ou le profil oreillette Bluetooth.

14. Système selon l'une des revendications 7 à 13, dans lequel le moyen de transmission-réception (12 ; 32) est configuré pour recevoir et/ou router automatiquement les données audio, si la réception et/ou le routage sont initiés par un utilisateur.

15. Système selon l'une des revendications 7 à 14 et configuré pour changer le volume de sortie des données audio sorties par le système audio de véhicule (14 ; 24; 34; 44; 44'), si une condition prédéterminée est satisfaite, en particulier, dans lequel le volume de sortie est réduit, si des données sont reçues par le moyen de transmission-réception (12 ; 32) en provenance d'un téléphone mobile (20 ; 48) qui est connecté au système audio et/ou une classe prédéterminée de données de diffusion est sortie par le système audio de véhicule (14 ; 24 ; 34 ; 44 ; 44').

16. Système selon l'une des revendications 7 à 15, dans lequel le dispositif audio mobile (16 ; 26 ; 46 ; 46') comprend un lecteur de cassette, un lecteur CD, un lecteur DVD ou un lecteur MP3.

17. Produit de programme informatique, comprenant un ou plusieurs supports lisibles par ordinateur ayant des instructions exécutables par ordinateur pour effectuer les étapes du procédé selon l'une des revendications 1 à 6.
